# FASCICULE DE BREVET EUROPEEN

(11) **EP 2 398 861 B1**
(45) Date de publication et mention de la délivrance du brevet: **25.07.2018**
(21) Numéro de dépôt: 10704159.2
(22) Date de dépôt: 19.02.2010
(51) Int. Cl.: C09C 1/00, C09D 5/08

(54) **PROCEDE DE DETOXICATION PERMETTANT L'OBTENTION D'UN COMPOSE PIGMENTAIRE ZINCIFERE EXEMPT D'ECOTOXICITE**
ENTGIFTUNGSVERFAHREN ZUR HERSTELLUNG EINER ÖKOTOXIKOLOGISCH UNBEDENKLICHEN ZINKHALTIGEN PIGMENTÄREN VERBINDUNG
DETOXIFICATION METHOD FOR OBTAINING A ZINCKY PIGMENTARY COMPOUND WITH NO ECOTOXICITY

(30) Priorité: 20.02.2009 FR 0951104
(43) Date de publication de la demande: 28.12.2011
(73) Titulaire: Societe Nouvelle Des Couleurs Zinciques, 59111 Bouchain (FR)
(72) Inventeur: BERTELOOT, Christelle, F-59490 Somain (FR); ERNST, Vincent, F-59493 Villeneuve D'Ascq (FR); MAVEL, Ludovic, F-59111 Hordain (FR)
(74) Mandataire: Esselin, Sophie
(86) Numéro de dépôt international: PCT/EP2010/052118
(87) Numéro de publication internationale: WO 2010/094764

(56) Documents cités:
- EP-A- 0 028 290
- DE-A1- 4 014 523
- DE-A1- 19 541 895
- FR-A- 2 254 614
- FR-A- 2 295 101

## Description

Les composés pigmentaires zincifères sont confrontés à des contraintes de plus en plus sévères en terme d'utilisation pour répondre aux différentes exigences et directives environnementales européennes et notamment dans les domaines tels que le transport, le stockage et le recyclage.

Ces dernières années de nombreuses réglementations sont apparues, parmi lesquelles on peut citer les réglementations suivantes :
- DEEE - Déchets d'Équipements Électriques et Électroniques - 2002
- ROHS - Restriction of the use of certain Hazardous Substances - 2002
- Recyclage des Véhicules Hors d'Usage - RVHU - 2002
- REACH - Registration, Evaluation and Authorisation of Chemicals - 2007
- GHS - Globally Harmonized System of Classification and Labelling of Chemicals - 2005

Ainsi de part leur écotoxicité, l'utilisation des composés pigmentaires zincifères s'est complexifiée au fil des années.

C'est notamment le cas du phosphate de zinc et de l'oxyde de zinc.

La classification des sels de zinc dont notamment le phosphate de zinc et l'oxyde de zinc a ainsi été établie en 2004. Le phosphate de zinc est nommément mentionné dans le 28^{ème} A.P.T. - Adaptation aux Progrès Techniques - de la directive européenne 67/548/CEE. Le phosphate de zinc est étiqueté N/Dangereux pour l'environnement aquatique, et R50/53 - « Très toxique pour les organismes aquatiques, peut entraîner des effets néfastes à long terme pour l'environnement aquatique ».

Le tableau 1 récapitule selon les quantités utilisées de phosphate de zinc Zn₃(PO₄)₂, 2 à 4 H₂O dans un produit utilisé, les contraintes d'étiquetage ainsi que les phrases de risque du code du travail associées conformément à la directive 99/45/CE.

**Tableau 1 : Etiquetage et phrases de risque lors de l'utilisation de phosphate de zinc dans un produit selon 1999/45/CE.**

| **Quantité de Zn₃(PO₄)₂** | **Etiquetage** | **Phrase de risque** |
|---|---|---|
| >25% | 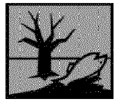 | R50/53 |
| | | Très toxique pour les organismes aquatiques, peut entraîner des effets néfastes à long terme pour l'environnement aquatique |
| 2,5% - 25% | 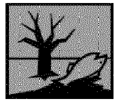 | R51/53 |
| | | Toxique pour les organismes aquatiques, peut entraîner des effets néfastes à long terme pour l'environnement aquatique |
| 0,25% - 2,5% | Aucune | R52/53 |
| | | Nocif pour les organismes aquatiques, peut entraîner des effets néfastes à long terme pour l'environnement aquatique. |
| <0,25% | Aucune | Aucune |

Ainsi toute formule qui contient plus de 2,5% en masse de ce composé est de ce fait étiquetée N/Dangereux pour l'environnement aquatique. Un nouveau besoin est ainsi apparu car certains marchés n'acceptent pas cet étiquetage et demandent des composés pigmentaires qui n'entrainent pas l'étiquetage N.

Conformément à la directive 99/45/CE, le formulateur, pour éviter l'étiquetage N, est contraint d'utiliser moins de 2,5% en masse d'un produit N, R50/53 comme le phosphate de zinc, or dans le cas des peintures anticorrosion, les performances de résistance augmentent avec la teneur en phosphate de zinc.

Il est à noter que de manière conventionnelle, sont définis comme « substances », d'après la directive européenne 1999/45/CE, les éléments chimiques et leurs composés à l'état naturel ou tels qu'obtenus par tout procédé de production, y compris tout additif nécessaire pour préserver la stabilité du produit et toute impureté dérivant du procédé, mais à l'exclusion de tout solvant qui peut être séparé sans affecter la stabilité de la substance ni modifier sa composition.

Il est à noter également que de manière conventionnelle, sont définis comme « préparations », les mélanges ou solutions composés de deux substances ou plus.

Dans ce contexte, des composés pigmentaires utilisés en peinture anticorrosion ne contenant pas de zinc, qui avaient ainsi été développés ces dernières années, retrouvent de l'intérêt. Des brevets ont notamment été déposés sur le phosphate B-tricalcique (Budenheim, 1991, DE 4014523 A1), et sur les mélanges de phosphate B-tricalcique ou dicalcique et de phosphate trimagnésien (Budenheim, 1996-1997, DE 195 41 895 A1 - US005665149A).

Il a également été démontré que les pigments anticorrosion contenant du phosphate de magnésium ont des attraits intéressants en peinture (Albright et Wilson, 1976, US003960611A), sans toutefois égaler le phosphate de zinc.

Ces pigments sans zinc sont performants dans certains systèmes de peintures mais ne sont pas aussi universels que le phosphate de zinc. En effet, le phosphate de zinc est performant dans la plupart des formulations utilisées en peinture anticorrosion.

Dans ce contexte, l'objectif recherché est de développer un procédé de détoxication permettant l'obtention d'un composé pigmentaire exempt d'écotoxicité aquatique aigüe et chronique comprenant au moins un composant à base de zinc présentant de bonnes propriétés anticorrosives fortement toxique de phosphate de zinc Zn₃(PO₄)₂,0 à 4H₂O et/ou de l'oxyde de zinc caractérisé en ce qu'il comprend, le mélange de phosphate de zinc Zn₃(PO₄)₂,0 à 4H₂O avec du phosphate de magnésium MgHPO₄,3H₂O ou le mélange de phosphate de zinc Zn₃(PO₄)₂,0 à 4H₂O et d'oxyde de zinc avec du phosphate de magnésium MgHPO₄,3H₂O, le ratio pondéral entre le phosphate de zinc et le phosphate de magnésium étant d'environ 90 %/10%, ou le ratio pondéral entre le phosphate de zinc, le phosphate de magnésium, et l'oxyde de zinc étant d'environ 80%/10%/10%.

Selon une variante de l'invention, ledit composant pigmentaire exempt de toxicité présente un taux d'inhibition des algues inférieur à 50% selon le protocole OCDE 201, un taux d'immobilisation des daphnies inférieur à 50% selon le protocole OCDE 202, un taux de mortalité des poissons inférieur à 50% selon le protocole OCDE 203, ce qui conduit à des CL50 (concentration léthales par ingestion pour 50% de la population) et CE50 (concentration léthale par inhalation pour 50% de la population) supérieures à 100mg/L, et une CSEO (Concentration Sans Effet Observé) strictement supérieure à 1 mg/L sur la reproduction des daphnies selon le protocole OCDE 211.

L'invention a aussi pour objet un procédé d'élaboration d'une peinture anticorrosion caractérisé en ce qu'il utilise le composé pigmentaire obtenu par le procédé de détoxication selon l'invention.

Selon une variante de l'invention, le procédé d'élaboration de peinture, comprend l'utilisation d'un composé pigmentaire en combinaison avec une charge non écotoxique comme par exemple le talc, la baryte, le kaolin, la silice, les silicates ou carbonates d'aluminium, de calcium, de magnésium, de potassium, l'oxyde de fer, le vert oxyde de chrome, le mica, la ferrite, le carbonate, le dioxyde de titane pour l'élaboration d'une peinture.

Selon une variante de l'invention, le procédé de détoxication permettant l'obtention d'un composé pigmentaire comprend le mélange de poudre par voie physique ou chimique de type précipitation séquentielle, cristallisation séquentielle, coprécipitation, cocristallisation, broyage, malaxage, dispersion, extrusion, empâtage, granulation.

L'invention a aussi pour objet un procédé d'obtention d'un revêtement comportant un polymère de type époxy, alkyde, acrylique, vinylique, polyuréthane, polyester, aminoplaste, polyoléfine, phénolique, butyrale, butadiène, PVDF, caoutchouc, huile synthétique ou naturelle caractérisé en ce qu'il utilise le composé pigmentaire obtenu par le procédé de détoxication de l'invention.

L'invention a encore pour objet l'utilisation d'un revêtement anticorrosion obtenu selon le procédé de la présente invention, pour le traitement de pièce ou objet métallique tel que véhicule automobile, navire, aéronef, pont, engin de travaux publics, ferroviaire, bâtiment agricole, industriel, « coil coating », matériel électronique, informatique, et électroménager, installation gazière et pétrolière.

L'invention a encore pour objet un procédé d'obtention d'une matière plastique caractérisé en ce qu'il utilise le composé pigmentaire obtenu par le procédé de détoxication selon l'invention.

L'invention a encore pour objet un procédé d'obtention d'un mastic caractérisé en ce qu'il utilise le composé pigmentaire obtenu par le procédé de détoxication selon l'invention.

L'invention a aussi pour objet un procédé d'obtention d'un adhésif caractérisé en ce qu'il utilise le composé pigmentaire obtenu par le procédé de détoxication selon l'invention.

L'invention a encore pour objet un procédé d'obtention d'une encre caractérisé en ce qu'il utilise le composé pigmentaire obtenu par le procédé de détoxication selon l'invention.

L'invention a aussi pour objet un procédé d'obtention d'une matière caoutchoutique naturelle ou synthétique caractérisé en ce qu'il utilise le composé pigmentaire obtenu par le procédé de détoxication selon l'invention.

L'invention a encore pour objet un procédé d'obtention d'un lubrifiant solide ou liquide caractérisé en ce qu'il utilise le composé pigmentaire obtenu par le procédé de détoxication selon l'invention.

L'invention a aussi pour objet un procédé d'obtention d'une substance fertilisante caractérisé en ce qu'il utilise le composé pigmentaire obtenu par le procédé de détoxication selon l'invention.

L'invention a encore pour objet un procédé d'obtention d'un composé anti-UV pour matières plastiques caractérisé en ce qu'il utilise le composé pigmentaire obtenu par le procédé de détoxication selon l'invention.

L'invention a enfin pour objet un procédé d'obtention d'un composé anti-UV pour cosmétiques caractérisé en ce qu'il utilise le composé pigmentaire obtenu par le procédé de détoxication selon l'invention.

L'invention a encore pour objet l'utilisation d'un revêtement anticorrosion selon l'invention, pour le traitement de pièce ou objet métallique tel que véhicule automobile, navire, aéronef, pont, engin de travaux publics, ferroviaire, bâtiment agricole, industriel, « coil coating », matériel électronique, informatique, et électroménager, installation gazière et pétrolière.

L'invention sera mieux comprise et d'autres avantages apparaîtront à la lecture de la description qui va suivre donnée à titre non limitatif et grâce aux figures annexées parmi lesquelles :

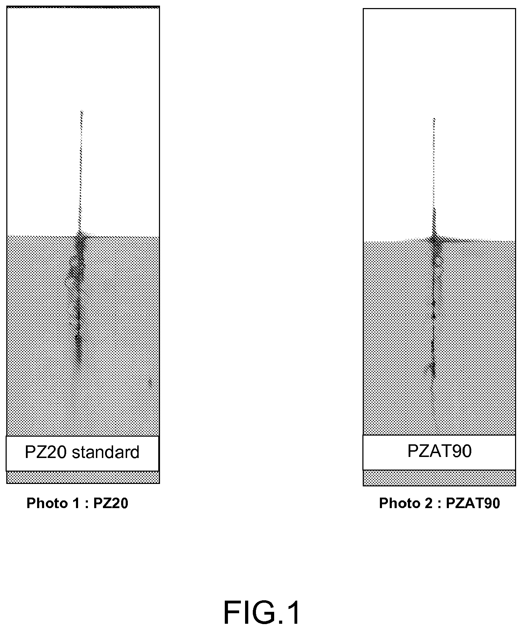

- la figure 1 illustre des tests de peinture permettant d'évaluer les performances anticorrosion réalisés selon les normes cloquage pleine plaque et degré d'enrouillement ASTM 1654 d'un revêtement comprenant un primaire d'adhérence anticorrosion d'un premier type d'époxy amide incorporant un phosphate de zinc standard, d'un revêtement comprenant un primaire d'adhérence anticorrosion d'un premier type d'époxy amide incorporant un premier composé selon l'invention, et d'un revêtement comprenant un primaire d'adhérence anticorrosion d'un deuxième type d'époxy amide incorporant un deuxième composé selon l'invention

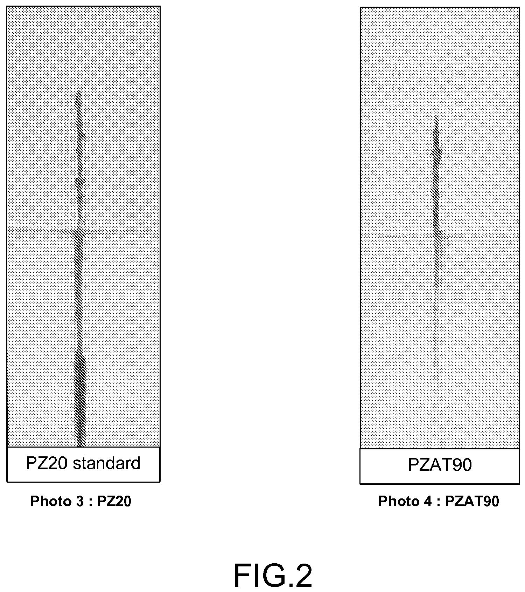

- la figure 2 illustre des tests de peinture permettant d'évaluer les performances anticorrosion réalisés selon les normes cloquage pleine plaque et degré d'enrouillement ASTM 1654 d'un revêtement comprenant un primaire d'adhérence anticorrosion d'un premier type d'époxy amine incorporant un phosphate de zinc standard, d'un revêtement comprenant un primaire d'adhérence anticorrosion d'un premier type d'époxy amine incorporant un premier composé selon l'invention, et d'un revêtement comprenant un primaire d'adhérence anticorrosion d'un premier type d'époxy amine incorporant un deuxième composé selon l'invention.

La suite de la description est plus particulièrement présentée dans le cadre du mono hydrogéno-phosphate de magnésium, très bien adapté car présentant une très bonne compatibilité avec le phosphate de zinc.

### Exemple de composé anticorrosion à base de phosphate de zinc, d'oxyde de zinc et de phosphate de magnésium.

Le composé suivant a été testé :

| | |
|---|---|
| PZATB: | PZ 80%/PAT30 10%/ZnO 10% |
| avec PZ : | Zn₃(PO₄)₂,0 à 4H₂O et |
| PAT30 : | MgHPO₄,3H₂O |

### 1) Tests d'écotoxicité sur les composés anticorrosion à base de phosphate de zinc, d'oxyde de zinc et de phosphate de magnésium.

Il existe deux voies possibles pour déterminer l'étiquetage dangereux pour l'environnement des préparations :
- une première voie régie selon la règle des mélanges de substances, c'est-à-dire selon la composition du produit. Par cette voie, tout produit contenant du zinc est de ce fait dangereux pour l'environnement.
- une deuxième voie régie selon les tests d'écotoxicité en accord avec les protocoles OCDE 201, 202, 203 pour l'écotoxicité aigüe sur la préparation contenant des matières dangereuses, cette deuxième voie possible prévalant sur la première voie tel que défini dans les règlements 1999/45/CE et 1272/2008/CE reprenant les critères de classification d'une préparation ou d'un mélange testé contenant au moins une matière dangereuse.

Selon la deuxième voie, les tests sont réalisés sur les trois espèces suivantes : les algues, les daphnies, et les poissons.

D'un point de vue réglementation la demanderesse a suivi l'annexe 5 modifié de la directive 67/548/CEE, la directive 99/45/CEE relative aux préparations modifiées, le rapport du GHS réalisé en 2003 - partie 3, paragraphe 3.10.3 relatif aux critères de classification des mélanges, et des tests ont été réalisés suivant les lignes directrices de l'OCDE 201 adoptée le 23 Mars 2006, 202 adoptée le 13 avril 2004, 203 adoptée le 17 juillet 1992.

L'étiquetage classique d'un composé s'effectue par la suite par rapport au résultat le plus mauvais des trois tests aigue et permet d'apporter les résultats récapitulés dans le tableau 2, dans lequel sont définis selon une concentration C, une durée de test exprimée en heures et un taux de 50 pourcent d'espèces succombant au terme du nombre d'heures identifiées, les étiquetages imposés ou non.

**Tableau 2 : Etiquetage et phrases de risque selon les résultats obtenus lors des tests d'écotoxicité selon 1999/45/CE**

| **Tests** | **Concentration C** | **Etiquetage** | **Phrase de risque** |
|---|---|---|---|
| 96H CL50 (poisson) | ≤ 1 mg/l | 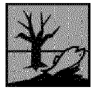 | R50/53 |
| 48 H CE50 (daphnie) | | | Très toxique pour les organismes aquatiques, peut entraîner des effets néfastes à long terme pour l'environnement aquatique |
| 72H CL50 (algues) | | | |
| 96H CL50 (poisson) | entre 1 et 10 mg/l | 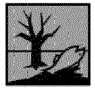 | R51/53 |
| 48 H CE50 (daphnie) | | | Toxique pour les organismes aquatiques, peut entraîner des effets néfastes à long terme pour l'environnement aquatique |
| 72H CL50 (algues) | | | |
| 96H CL50 (poisson) | entre 10 et 100 mg/l | Aucun | R52/53 |
| 48 H CE50 (daphnie) | | | Nocif pour les organismes aquatiques, peut entraîner des effets néfastes à long terme pour l'environnement aquatique. |
| 72H CL50 (algues) | | | |
| 96H CL50 (poisson) | > 100mg/L | Aucun | R53 ou aucune phrase de risque en fonction de l'écotoxicité chronique |
| 48 H CE50 (daphnie) | | | |
| 72H CL50 (algues | | | |

Le système d'étiquetage harmonisé global GHS dans sa dernière révision de 2009, reprend et confirme les limites maximales de 1 (catégorie 1) 10 (catégorie 2 [1 à 10mg/l]) et 100 mg/l (catégorie 3 [10 à 100mg/l]) comme critères de classification de toxicité aquatique aigue des catégories 1 à 3. Au dessus de 100 mg/l de toxicité aigue la substance ou la préparation n'est pas classifiée pour sa toxicité.

En outre le GHS précise également que lorsque la toxicité chronique présente une concentration sans effet observé supérieure à 1 mg/l, alors cette substance ou ce mélange n'est pas soumis à classification pour son caractère chronique

Les tests ont été effectués au CIT, Centre International de Toxicologie à Evreux (France).

La préparation a été réalisée par mélange physique.

L'appellation BPL désigne les tests réalisés selon les Bonnes Pratiques de Laboratoire.

On désigne par :
- la référence CL50 : la concentration létale par ingestion pour 50% de la population ;
- la référence CE50 : la concentration létale par inhalation pour 50% de la population

### 1.1. Ecotoxicité aigüe sur les algues Pseudokirchneriella Subcapitata

**Tableau 3 : Résultats de l'écotoxicité aigüe sur les algues Pseudokirchneriella Subcapitata**

| Préparation | Test BPL / Non BPL | Inhibition algues (%) | CL50 (mg /l) |
|---|---|---|---|
| PZATB | Non BPL | 36,2 | >100 |

Le tableau 3 montre que l'inhibition des algues est inférieure à 50%. La préparation n'est donc pas écotoxique pour les algues du fait d'une écotoxicité aigüe CL50>100mg/L selon le protocole OCDE 201.

### 1.2. Ecotoxicité aigüe sur les crustacés Daphnia Magna

**Tableau 4 : Résultats de l'écotoxicité aigüe sur les crustacés Daphnia Magna**

| Préparation | Test BPL/ non BPL | Immobilisation daphnies (%) | CE50 (mg/L) |
|---|---|---|---|
| PZATB | Non BPL | 0 | >100 |

Le tableau 4 montre qu'aucune daphnie n'est immobilisée. La préparation n'est donc pas écotoxique pour les crustacés du fait d'une écotoxicité aigüe CE50>100mg/L selon le protocole OCDE 202.

### 1.3. Ecotoxicité aigüe sur les poissons Oncorhynchus Mykiss

**Tableau 5 : Résultats de l'écotoxicité aigüe sur les poissons Oncorhynchus Mykiss**

| Préparation | Test BPL/ non BPL | Nombre de truites | Mortalité truites (%) | CL50 (mg/L) |
|---|---|---|---|---|
| PZATB | Non BPL | 10 | 0 | >100 |

Le tableau 5 montre qu'aucune truite n'est morte. La préparation ne présente pas de toxicité pour les poissons du fait d'une écotoxicité aigüe CL50>100mg/L selon le protocole OCDE 203.

Il ressort ainsi de ces analyses que le PZATB ne présente pas de toxicité aigue.

### Exemple de composés anticorrosion à base de phosphate de zinc et de phosphate de magnésium.

Différents composés ont été fabriqués et testés présentant des ratio pondéraux entre phosphate de zinc et mono hydrogéno-phosphate de magnésium variant de 99%/1% à 4,3%/95,7%, et identifiés comme suit :

| | |
|---|---|
| PZAT 99*: | PZ 99%/PAT30 1% |
| PZAT 95*: | PZ 95%/PAT30 5% |
| PZAT 90: | PZ 90%/PAT30 10% |
| PZAT 80*: | PZ 80%/PAT30 20% |
| PZAT 70*: | PZ 70%/PAT30 30% |
| PZAT 60*: | PZ 60%/PAT30 40% |
| PZAT 50*: | PZ 50%/PAT30 50% |
| PZAT 40*: | PZ 40%/PAT30 60% |
| PZAT 04* | PZ 4,3%/PAT30 95,7% |
| avec PZ : | Zn₃(PO₄)₂,0 à 4H₂O et |
| PAT30 : | MgHPO₄,3H₂O |

| | |
|---|---|
| (* Mode de réalisation non couvert par les revendications) | |

### 2) Tests d'écotoxicité aigüe sur les composés anticorrosion à base de phosphate de zinc et de phosphate de magnésium

Des tests ont été effectués au CIT, Centre International de Toxicologie à Evreux (France).

Les préparations ont été réalisées par mélange physique.

L'appellation BPL désigne les tests réalisés selon les Bonnes Pratiques de Laboratoire.

On désigne par :
- la référence CL50 : la concentration létale par ingestion pour 50% de la population ;
- la référence CE50 : la concentration létale par inhalation pour 50% de la population

### 2.1. Ecotoxicité aigüe sur les algues Pseudokirchneriella Subcapitata

**Tableau 6 : Résultats de l'écotoxicité aigüe sur les algues Pseudokirchneriella Subcapitata**

| Préparation | Test BPL / Non BPL | Inhibition algues (%) | CL50 (mg /l) |
|---|---|---|---|
| PZ 99%/PAT30 1 % | BPL | 16,29 | >100 |
| PZ 95%/PAT30 5% | BPL | 6,76 | >100 |
| PZ 90%/PAT30 10% | BPL | 11,67 | >100 |
| PZ 80%/PAT30 20% | Non BPL | 23,58 | >100 |
| PZ 70%/PAT30 30% | Non BPL | 19,16 | >100 |
| PZ 60%/PAT30 40% | Non BPL | 17,5 | >100 |
| PZ 50%/PAT30 50% | Non BPL | 13,72 | >100 |
| PZ 40%/PAT30 60% | Non BPL | 6,58 | >100 |
| PZ 4,3%/PAT30 95,7% | BPL | 12,24 | >100 |

Le tableau 6 montre que l'inhibition des algues est inférieure à 50%. La préparation n'est donc pas écotoxique pour les algues du fait d'une écotoxicité aigüe CL50>100mg/L selon le protocole OCDE 201.

### 2.2. Ecotoxicité aigüe sur les crustacés Daphnia Magna

**Tableau 7 : Résultats de l'écotoxicité aigüe sur les crustacés Daphnia Magna**

| Préparation | Test BPL/ non BPL | Immobilisation daphnies (%) | CE50 (mg/L) |
|---|---|---|---|
| PZ 99%/PAT30 1 % | BPL | 0 | >100 |
| PZ 95%/PAT30 5% | BPL | 0 | >100 |
| PZ 90%/PAT30 10% | BPL | 0 | >100 |
| PZ 80%/PAT30 20% | Non BPL | 0 | >100 |
| PZ 70%/PAT30 30% | Non BPL | 0 | >100 |
| PZ 60%/PAT30 40% | Non BPL | 0 | >100 |
| PZ 50%/PAT30 50% | Non BPL | 0 | >100 |
| PZ 40%/PAT30 60% | Non BPL | 0 | >100 |
| PZ 4,3%/PAT30 95,7% | BPL | 0 | >100 |

Le tableau 7 montre qu'aucune daphnie n'est immobilisée. La préparation n'est donc pas écotoxique pour les crustacés du fait d'une écotoxicité aigüe CE50>100mg/L selon le protocole OCDE 202.

### 2.3. Ecotoxicité aigüe sur les poissons Oncorhynchus Mykiss

**Tableau 8 : Résultats de l'écotoxicité aigüe sur les poissons Oncorhynchus Mykiss**

| Préparation | Test BPL/ non BPL | Nombre de truites | Mortalité truites (%) | CL50 (mg/L) |
|---|---|---|---|---|
| PZ 99%/PAT30 1 % | BPL | 10 | 0 | >100 |
| PZ 95%/PAT30 5% | BPL | 10 | 0 | >100 |
| PZ 90%/PAT30 10% | BPL | 10 | 0 | >100 |
| PZ 80%/PAT30 20% | Non BPL | 10 | 0 | >100 |
| PZ 70%/PAT30 30% | Non BPL | 10 | 0 | >100 |
| PZ 60%/PAT30 40% | Non BPL | 10 | 0 | >100 |
| PZ 50%/PAT30 50% | Non BPL | 10 | 0 | >100 |
| PZ 40%/PAT30 60% | Non BPL | 10 | 0 | >100 |
| PZ 4,3%/PAT30 95,7% | BPL | 10 | 0 | >100 |

Le tableau 8 montre qu'aucune truite n'est morte. La préparation ne présente pas de toxicité pour les poissons du fait d'une écotoxicité aigüe CL50>100mg/L selon le protocole OCDE 203.

Différents composés ont été fabriqués et testés présentant des ratio pondéraux entre phosphate de zinc et mono hydrogéno-phosphate de magnésium variant de 99%/1% à 25%/75%, et identifiés comme suit :

| | |
|---|---|
| PZAT 99 * : | PZ 99%/PAT30 1 % |
| PZAT 92 * : | PZ 92%/PAT30 8% |
| PZAT 25 * : | PZ 75%/PAT30 25% |
| avec PZ : | Zn₃(PO₄)₂,0à 4H₂O et |
| PAT30 : | MgHPO₄,3H₂O |

| | |
|---|---|
| (* Mode de réalisation non couvert par les revendications) | |

### 3) Tests d'écotoxicité chronique sur les composés anticorrosion à base de phosphate de zinc et de phosphate de magnésium

Il existe deux voies possibles pour déterminer l'étiquage dangereux pour l'environnement à long terme des préparations :
- une première voie régie selon la règle des mélanges de substances, c'est-à-dire selon la composition du produit. Par cette voie, tout produit contenant plus de 25% d'un produit R53 (1999/45/CE) présente de ce fait une écotoxicité chronique
- une deuxième voie régie selon les tests d'écotoxicité sur l'espèce la plus sensible qui dans le cas des sels de zinc sont les daphnies en accord avec le protocole OCDE 211 sur la préparation contenant des matières dangereuses, cette deuxième voie possible prévalant sur la première voie.

D'un point de vue réglementation la demanderesse a suivi l'annexe 5 modifié de la directive 67/548/CEE, la directive 99/45/CEE relative aux préparations modifiées au tableau 9, le règlement 1272/2008 CE issu des recommandations de l'ONU rapport du GHS réalisé en 2003 modifié - partie 3, paragraphe 3.10.3 au tableau 10 relatif aux critères de classification des mélanges, et des tests ont été réalisés suivant les lignes directrices de l'OCDE 211 adoptée le 3 octobre 2008.
On désigne par CSEO la Concentration Sans Effet Observé.

**Tableau 9 : Etiquetage et phrases de risque d'écotoxicité chronique selon le GHS**

| Tests | Etiquetage et phrases de risque selon le GHS |
|---|---|
| Si CSEO < ou = 1 mg/L | Peut entraîner des effets néfastes à long terme pour l'environnement aquatique |
| Si CSEO > 1mg/L | Pas d'étiquette Pas de phrase de risque |

**Tableau 10 : Etiquetage et phrases de risque d'écotoxicité chronique selon la réglementation 1999/45/CE pour les préparations ou mélanges**

| Contenu | Etiquetage et phrases de risque selon la réglementation actuelle |
|---|---|
| Si le contenu en substance R53 >25% (en l'absence de R50 ou 51 ou 52) | R53 |
| | Peut entraîner des effets néfastes à long terme pour l'environnement aquatique |
| Si le contenu en substance R53 <25% (en l'absence de R50 ou 51 ou 52) | Pas d'étiquette |
| | Pas de phrase de risque |

Des tests ont été effectués au CIT, Centre International de Toxicologie à Evreux (France).

Les préparations ont été réalisées par mélange physique.

Les tests ont été effectués en BPL. L'appellation BPL désigne les tests réalisés selon les Bonnes Pratiques de Laboratoire.

**Tableau 11 : Résultats des tests d'écotoxicité chronique**

| Préparation | Mortalité | Croissance | Reproduction | CSEO |
|---|---|---|---|---|
| PZAT99 | Sans effet | Sans effet | Sans effet | > ou = 1,5mg/L |
| PZAT92 | Sans effet | Sans effet | Sans effet | > ou = 1,5mg/L |
| PZAT25 | Sans effet | Sans effet | Sans effet | > ou = 1,5mg/L |

Le tableau 11 montre que les préparations ne présentent pas d'écotoxicité chronique du fait d'une CSEO > 1mg/L selon le protocole OCDE 211.

Ainsi l'ensemble des préparations contenant du phosphate de zinc et du phosphate de magnésium ne présente aucun étiquetage dangereux pour l'environnement (pas d'écotoxicité aigüe ni chronique).

Les préparations de 0 à 25% de phosphate de zinc ne présentant pas d'écotoxicité chronique d'après la règle des mélanges, on a démontré que tout composé contenant de 0 à 99% de phosphate de zinc en mélange avec du phosphate de magnésium est de ce fait exempt d'étiquetage dangereux pour l'environnement.

Il ressort ainsi de ces analyses que l'ensemble de ces préparations citées ci-dessus en point 2 et 3 ne sont pas dangereuses pour l'environnement tant pour les caractères aigue et chronique.

Les composés correspondant énumérés ci-dessus ont été évalués en terme d'écotoxicité et, à titre d'illustration industrielle, sont également évalués en terme de performances anticorrosion.

Pour cela on réalise des primaires d'adhérence anticorrosion classiques de type système époxy en phase solvant incorporant les différents composés pigmentaires sans qu'il y ait de notables pertes de performances par rapport au PZ.

En effet dans le cadre de la problématique de revêtement anticorrosion, on cherche à développer des primaires d'adhérence anticorrosion correspondant à la première couche destinée à revêtir une surface métallique, elle-même destinée à supporter de manière classique une seconde couche de peinture portant généralement la couleur dudit revêtement et dénommée fréquemment couche de finition.

### 4) Tests anticorrosion en peinture

Ainsi la demanderesse a effectué des tests en peinture prouvant les bonnes performances anticorrosion en peinture des composés. Ces tests ont été effectués avec des primaires époxy phase solvant.

### Illustration 1 : Tests de la préparation dans un primaire alkyde vinylique phase solvant

La formule du tableau 12 a été réalisée.

**Tableau 12 : formule d'un primaire alkyde vinylique phase solvant**

| **MATIERES PREMIERES** | **% POIDS** | **DESCRIPTION** | **FOURNISSEURS** |
|---|---|---|---|
| SETAL 199-SS-55 | 25,5 | Alkyde moyenne en huile | NUPLEX |
| ACETONE | 5,00 | solvant | SHELL |
| NUODEX 10% Ca | 0,50 | Agent dispersant | ELEMENTIS Specialities |
| BENTONE SD2 | 0,30 | Additif rheologique | NL Chemicals |
| SOLVESSO 100 | 7,5 | Solvant aromatique | EXXON CHEMICAL |
| **PHOSPHATE DE ZINC PZ20** | **8,00** | **Inhibiteur de corrosion** | **SNCZ** |
| TALC 10 M2 | 4,00 | charge | RIO TINTO Minerals |
| MICA MU M 2/1 | 9,00 | charge | CMMP |
| MICRONOX | 11,00 | Oxyde de fer naturel micronisé | KEYSER ET MACKAY |
| THIXATROL ST | 0,30 | Additif thixotropique | NL Chemicals |
| broyage 40 minutes jusqu'à finesse Hegman de 6 | | | |
| LAROFLEX MP35/S100 at 28.5% | 21,10 | Copolymer chlorure de vinyl | BASF |
| SOLVESSO 100 | 2,93 | Solvant aromatique | EXXON CHEMICAL |
| ALCCOL ISOPROPYLIC | 1,20 | solvant | SHELL |
| CERECLOR 42 | 0,60 | Paraffine chorée, plastifiant | INEOS |
| NUODEX 8% Co | 0,05 | siccatif | ELEMENTIS Specialities |
| NUODEX 10% Zr | 0,12 | siccatif | ELEMENTIS Specialities |
| DUOMEEN TDO | 0,30 | Surfactant cationique | AKZO Chemie |
| MEKO | 0,50 | Methylethyl cetoxime, agent antipeau | |
| ***CVP % (concentration volumique pigmentaire)*** | **30,21** | | |
| ***Extrait sec en poids%*** | **60,49** | | |
| ***Extrait sec volumique%*** | **41,62** | | |
| ***Ratio pigment*/*liant (en volume)*** | **0,43** | | |

### Comparatif des composés PZ, PZATB, et PZAT90 en primaire alkyde

Le PZ (Mode de réalisation non couvert par les revendications), la préparation PZ 80%/PAT30 10%/ZnO 10%, et la préparation PZ 90%/PAT30 10% ont été comparés. Le PZATB, et le PZAT90 ont été réalisés par mélange physique.

On réalise une couche de primaire anticorrosion incorporant les composés pigmentaires dans une résine de type alkyde d'épaisseur 40µm sur une surface métallique. Cette couche est recouverte d'un film d'une couche alkyde de 25 µm d'épaisseur, encore dénommée couramment couche de finition.

L'ensemble est soumis à l'exposition d'un brouillard salin (norme ASTM B117) durant 300 heures.

La figure 1 illustre les résultats obtenus.

Une cotation a permis d'évaluer le degré d'enrouillement et le degré de cloquage.

Pour le degré d'enrouillement, la norme NF ISO 4628-3 T30-140-3 a été utilisée.
Ri0 : pas d'enrouillement, 0% d'aire rouillée
Ri1 : très peu d'enrouillement 0,5% d'aire rouillée
Ri5 : très rouillé 40 à 50% d'aire rouillée

Pour le degré de cloquage, les normes NF ISO 4628-1 T30-140-2 et NF ISO 4628-3 T30-140-2 ont été utilisées
D0S0 : aucun défaut décelable à dimension invisible sous agrandissement X10
D2S2 : petites cloques en petite quantité
D5S5 : grosses cloques en grande quantité

La « cotation griffe » et la « cotation générale » se sont effectuées suivant la norme ASTM D 1654 Janvier 2005- « Standard Test Method for Evaluation of Painted or Coated Specimens Subjected to Corrosive Environments »- tableau 1 et 2 respectivement page 3.
Cotation à la griffe :
10 représente 0 mm à la griffe
0 représente 16 mm et plus à la griffe
Cotation générale :
10 représente 0% de dégradation
0 représente plus de 75% de dégradation

La cotation au tableau 13 s'effectue en suivant les normes décrites ci-dessus.

**Tableau 13 : cotation du primaire alkyde vinylique phase solvant**

| | **Degré d'enrouillement NF-ISO 4828-3 T 30140-3** | **Degré de cloquage NF-ISO 4828-3 T 30140-3** | **Corrosion griffe ASTM 1654** | **Cotation générale pleine plaque ASTM 1654** |
|---|---|---|---|---|
| **PZ** | RI1 | D2S2 | 6 | 6 |
| **PZAT90** | RI1 | D3S2 | 4 | 4 |
| **PZATB** | RI0 | D0S0 | 8 | 9 |

Le PZATB est aussi performant que le PZ, et plus performant que le PZAT90.

### Illustration 2 : Tests de la préparation dans un primaire époxy amide phase solvant

La formule du tableau 14 a été réalisée.

**Tableau 14 : Formule d'un primaire époxy amide phase solvant**

| **MATIERES PREMIERES** | **% POIDS** | **DESCRIPTION** | **FOURNISSEURS** |
|---|---|---|---|
| **PART A** | | | |
| Introduire sous mélange dans l'ordre suivant | | | |
| EPIKOTE 1001/XYLENE 50/50 poids/poids | 22,90 | Résine époxy | HEXION |
| SOLVESSO 100 | 7,20 | Hydrocarbure aromatique solvant | TOTAL Chimie |
| ALCOOL ISOBUTYLIQUE | 1,60 | Solvant | SHELL |
| DOWANOL PMA | 7,30 | Ester de glycol, solvant | DOW |
| NUODEX 10% Ca | 0,50 | Agent de dispersion | ELEMENTIS Specialities |
| BENTONE SD2 | 0,15 | Additif rheologique | ELEMENTIS Specialities |
| TiO₂ TR92 | 4,30 | Rutile | HUNSTMANN |
| **PHOSPHATE DE ZINC PZ20** | **8,00** | **Inhibiteur de Corrosion** | **SNCZ** |
| YELLOW IRON OXIDE 3920 | 5,10 | Pigment colorant | BAYER |
| TALC 10 M2 | 9,30 | Charge | RIO TINTO Minerais |
| MICA MU 2/1 | 10,70 | Charge | CMMP |
| THIXATROL ST | 0,20 | Additif thixotropique | ELEMENTIS Specialities |
| Broyage billes pendant 40 minutes jusqu'à finesse 5 Hegman | | | |
| ACETATE DE BUTYL | 2,50 | Ester, solvant | TOTAL chimie |
| CERECLOR M50 | 2,40 | Paraffine chlorée plastifiant | INEOS |
| DUOMEEN TDO | 0,15 | Surfactant type cationique | AKZO Chemie |

| **PART B** | | | |
|---|---|---|---|
| XYLENE | 3,00 | Hydrocarbure aromatique, solvant | TOTAL Chimie |
| EPILINK 230 | 0,30 | Accélérateur | AKZO Chemie |
| ARADUR 115 X70 BD | 14,40 | Durcisseur polyamino amide | VANTICO |
| ***CVP % (concentration volumique pigmentaire)*** | ***34,5*** | | |
| ***Extrait sec en poids%*** | ***62,39*** | | |
| ***Extrait sec volumique%*** | ***44,75*** | | |
| ***Ratio pigment*/*liant (en volume)*** | ***0,53*** | | |

### Comparatif des composés PZ, PZATB, et PZAT90 en primaire époxy amide

Le PZ (Mode de réalisation non couvert par les revendications), la préparation PZ 80%/PAT30 10%/ZnO 10%, et la préparation PZ 90%/PAT30 10% ont été comparés. Le PZATB, et le PZAT90 ont été réalisés par mélange physique.

On réalise une couche de primaire anticorrosion incorporant les composés pigmentaires dans une résine de type époxy amide d'épaisseur 50µm sur une surface métallique. Cette couche est recouverte d'un film de polyuréthane PU de 100 µm d'épaisseur, encore dénommée couramment couche de finition.

L'ensemble est soumis à l'exposition d'un brouillard salin (norme ASTM B117) durant 600 heures.

La figure 2 illustre les résultats obtenus.

La cotation au tableau 15 s'effectue en suivant les mêmes normes que citées précédemment.

**Tableau 15 : cotation du primaire époxy amide phase solvant**

| | **Degré d'enrouillement NF-ISO 4828-3 T 30140-3** | **Degré de cloquage NF-ISO 4828-3 T 30140-3** | **Corrosion griffe ASTM* 1654** | **Cotation générale pleine plaque ASTM* 1654** |
|---|---|---|---|---|
| **PZ** | RI1 | D2S2 | 4 | 7 |
| **PZAT90** | RI1 | D2S2 | 6 | 8 |
| **PZATB** | RI1 | D2S2 | 3 | 6 |

Le PZAT90 est aussi performant que le PZ, et plus performant que le PZATB.

### Illustration 3 : Tests de la préparation dans un primaire époxy amine phase solvant

La formule au tableau 16 a été réalisée.

**Tableau 16 : Formule d'un primaire époxy amine phase solvant**

| **MATIERES PREMIERES** | **% POIDS** | **DESCRIPTION** | **FOURNISSEURS** |
|---|---|---|---|
| **PART A** | | | |
| Introduire sous mélange dans l'ordre suivant | | | |
| EPIKOTE 1001/XYLENE 50/50 poids/poids | 25,40 | Résine époxy | HEXION |
| SOLVESSO 100 | 7,90 | Hydrocarbure aromatique solvant | TOTAL chimie |
| ALCOOL ISOBUTYLIQUE | 1,80 | Solvant | SHELL |
| DOWANOL PMA | 8,00 | Ester de glycol, solvant | DOW |
| NUODEX 10% Ca | 0,50 | Agent de dispersion | ELEMENTIS Specialities |
| BENTONE SD2 | 0,20 | Additif rheologique | ELEMENTIS Specialities |
| TiO₂ TR92 | 4,80 | Rutile | HUNSTMANN |
| **PHOSPHATE DE ZINC PZ20** | **8,00** | **Inhibiteur de Corrosion** | **SNCZ** |
| OXYDE DE FER JAUNE 3920 | 5,70 | Pigment colorant | BAYER |
| TALC 10 M2 | 9,00 | Charge | RIO TINTO Minerais |
| MICA MU 2/1 | 10,00 | Charge | CMMP |
| THIXATROL ST | 0,20 | Additif thixotropique | ELEMENTIS Specialities |
| Broyage billes pendant 40 minutes jusqu'à finesse 5 hegman | | | |
| BUTYL ACETATE | 2,60 | Ester, solvant | TOTAL chimie |
| CERECLOR M50 | 2,60 | Paraffine chlorée plastifiant | INEOS |
| DUOMEEN TDO | 0,20 | Surfactant type cationique | AKZO Chemie |

| **PART B** | | | |
|---|---|---|---|
| XYLENE | 4,10 | Hydrocarbure aromatique solvant | TOTAL chimie |
| DOWANOL PMA | 4.10 | ester de glycol, solvant | DOW |
| EFFIDUR 433 | 4,90 | Cycloaliphatique polyamine | France INDUSTRIE |
| ***CVP % (concentration volumique pigmentaire)*** | ***39,27*** | | |
| ***Extrait sec en poids%*** | ***58,56*** | | |
| ***Extrait sec volumique%*** | ***39,27*** | | |
| ***Ratio pigment*/*liant (en volume)*** | ***0,65*** | | |

### Comparatif des composés PZ, PZATB, et PZAT90 en primaire époxy amine

On réalise un primaire anticorrosion à base d'époxy amine incorporant les préparations pigmentaires, d'épaisseur 50µm. Cette couche est recouverte d'un film de polyuréthane PU de 100 µm d'épaisseur, encore dénommée couramment couche de finition.

L'ensemble est soumis à l'exposition d'un brouillard salin-norme ASTM B117-durant 600 heures.

La figure 3 illustre les résultats obtenus.

La cotation au tableau 17 s'effectue en suivant les mêmes normes que citées précédemment.

**Tableau 17 : Cotation du primaire époxy amine phase solvant**

| | **Degré d'enrouillement NF-ISO 4828-3 T 30140-3** | **Degré de cloquage NF-ISO 4828-3 T 30140-3** | **Corrosion griffe ASTM* 1654** | **Cotation générale pleine plaque ASTM* 1654** |
|---|---|---|---|---|
| **PZ** | RI1 | D0S0 | 6 | 6 |
| **PZAT90** | RI0 | D0S0 | 8 | 9 |
| **PZATB** | RI1 | D0S0 | 6 | 6 |

Le PZATB est aussi performant que le PZ, le PZAT90 est plus performant que ces deux autres composés.

Une comparaison du PZ et du pigment PZAT90 en système époxy amide, et époxy amide en phase solvant montre des résultats très satisfaisants concernant la performance du pigment PZAT90.

## Revendications

1. Procédé de détoxication permettant l'obtention d'un composé pigmentaire exempt d'écotoxicité aquatique aigüe et chronique comprenant au moins un composant à base de zinc présentant de bonnes propriétés anticorrosives fortement toxique de phosphate de zinc Zn₃(PO₄)₂,0 à 4H₂O et/ou de l'oxyde de zinc **caractérisé en ce qu'**il comprend, le mélange de phosphate de zinc Zn₃(PO₄)₂,0 à 4H₂O avec du phosphate de magnésium MgHPO₄,3H₂O ou le mélange de phosphate de zinc Zn₃(PO₄)₂,0 à 4H₂O et d'oxyde de zinc avec du phosphate de magnésium MgHPO₄,3H₂O, le ratio pondéral entre le phosphate de zinc et le phosphate de magnésium étant d'environ 90 %/10%, ou le ratio pondéral entre le phosphate de zinc, le phosphate de magnésium, et l'oxyde de zinc étant d'environ 80%/10%/10%.

2. Procédé de détoxication permettant l'obtention d'un composé pigmentaire exempt d'écotoxicité aquatique aigüe et chronique selon la revendication 1, **caractérisé en ce que** ledit composant pigmentaire exempt de toxicité présente un taux d'inhibition des algues inférieur à 50% selon le protocole OCDE 201, un taux d'immobilisation des daphnies inférieur à 50% selon le protocole OCDE 202, un taux de mortalité des poissons inférieur à 50% selon le protocole OCDE 203, ce qui conduit à des CL50 (concentration léthales par ingestion pour 50% de la population) et CE50 (concentration léthale par inhalation pour 50% de la population) supérieures à 100mg/L, et une CSEO (Concentration Sans Effet Observé) strictement supérieure à 1 mg/L sur la reproduction des daphnies selon le protocole OCDE 211.

3. Procédé d'élaboration d'une peinture anticorrosion **caractérisé en ce qu'**il utilise le composé pigmentaire obtenu par le procédé de détoxication selon l'une des revendications 1 à 2.

4. Procédé d'élaboration d'une peinture anticorrosion selon la revendication 3, **caractérisé en ce qu'**il comprend l'utilisation d'un composé pigmentaire en combinaison avec une charge non écotoxique comme par exemple le talc, la baryte, le kaolin, la silice, les silicates ou carbonates d'aluminium, de calcium, de magnésium, de potassium, l'oxyde de fer, le vert oxyde de chrome, le mica, la ferrite, le carbonate, le dioxyde de titane pour l'élaboration d'une peinture.

5. Procédé de détoxication permettant l'obtention d'un composé pigmentaire exempt d'écotoxicité aquatique aigüe et chronique selon l'une des revendications 1 à 2, **caractérisé en ce qu'**il comprend le mélange de poudre par voie physique ou chimique de type précipitation séquentielle, cristallisation séquentielle, coprécipitation, cocristallisation, broyage, malaxage, dispersion, extrusion, empâtage, granulation.

6. Procédé d'obtention d'un revêtement comportant un polymère de type époxy, alkyde, acrylique, vinylique, polyuréthane, polyester, aminoplaste, polyoléfine, phénolique, butyrale, butadiène, PVDF, caoutchouc, huile synthétique ou naturelle **caractérisé en ce qu'**il utilise le composé pigmentaire obtenu par le procédé de détoxication selon l'une des revendications 1 à 2.

7. Utilisation d'un revêtement anticorrosion obtenu selon le procédé de la revendication 6, pour le traitement de pièce ou objet métallique tel que véhicule automobile, navire, aéronef, pont, engin de travaux publics, ferroviaire, bâtiment agricole, industriel, « coil coating », matériel électronique, informatique, et électroménager, installation gazière et pétrolière.

8. Procédé d'obtention d'une matière plastique **caractérisé en ce qu'**il utilise le composé pigmentaire obtenu par le procédé de détoxication selon l'une des revendications 1 à 2.

9. Procédé d'obtention d'un mastic **caractérisé en ce qu'**il utilise le composé pigmentaire obtenu par le procédé de détoxication selon l'une des revendications 1 à 2.

10. Procédé d'obtention d'un adhésif **caractérisé en ce qu'**il utilise le composé pigmentaire obtenu par le procédé de détoxication selon l'une des revendications 1 à 2.

11. Procédé d'obtention d'une encre **caractérisé en ce qu'**il utilise le composé pigmentaire obtenu par le procédé de détoxication selon l'une des revendications 1 à 2.

12. Procédé d'obtention d'une matière caoutchoutique naturelle ou synthétique **caractérisé en ce qu'**il utilise le composé pigmentaire obtenu par le procédé de détoxication selon l'une des revendications 1 à 2.

13. Procédé d'obtention d'un lubrifiant solide ou liquide **caractérisé en ce qu'**il utilise le composé pigmentaire obtenu par le procédé de détoxication selon l'une des revendications 1 à 2.

14. Procédé d'obtention d'une substance fertilisante **caractérisé en ce qu'**il utilise le composé pigmentaire obtenu par le procédé de détoxication selon l'une des revendications 1 à 2.

15. Procédé d'obtention d'un composé anti-UV pour matières plastiques **caractérisé en ce qu'**il utilise le composé pigmentaire obtenu par le procédé de détoxication selon l'une des revendications 1 à 2.

16. Procédé d'obtention d'un composé anti-UV pour cosmétiques **caractérisé en ce qu'**il utilise le composé pigmentaire obtenu par le procédé de détoxication selon l'une des revendications 1 à 2.

## Patentansprüche

1. Entgiftungsverfahren, mit dem eine Pigment-Verbindung ohne akute oder chronische Wasserökotoxizität erhalten werden kann, die mindestens eine Komponente auf Zinkbasis umfasst, die gute, stark toxische Korrosionsschutzeigenschaften von Zinkphosphat Zn₃(PO₄)₂,0 bis 4H₂O und/oder Zinkoxid aufweist, **dadurch gekennzeichnet, dass** es das Mischen von Zinkphosphat Zn₃(PO₄)₂,0 bis 4H₂O mit Magnesiumphosphat MgHPO₄,3H₂O oder das Mischen von Zinkphosphat Zn₃(PO₄)₂,0 bis 4H₂O und Zinkoxid mit Magnesiumphosphat MgHPO₄,3H₂O beinhaltet, wobei das Gewichtsverhältnis zwischen Zinkphosphat und Magnesiumphosphat etwa 90 %/10 % beträgt oder das Gewichtsverhältnis zwischen Zinkphosphat, Magnesiumphosphat und Zinkoxid etwa 80 %/10 %/10 % beträgt.

2. Entgiftungsverfahren, mit dem eine Pigment-Verbindung ohne akute oder chronische Wasserökotoxizität erhalten werden kann, nach Anspruch 1, **dadurch gekennzeichnet, dass** die Pigment-Verbindung ohne Toxizität eine Algeninhibitionsrate von weniger als 50 % gemäß Protokoll OCDE 201, eine Daphnienimmobilisierungsrate von weniger als 50 % gemäß Protokoll OCDE 202, eine Mortalitätsrate bei Fischen von weniger als 50 % gemäß Protokoll OCDE 203 aufweist, was CL50-Werte (tödliche Konzentration durch Aufnahme für 50 % der Bevölkerung) und CE50-Werte (tödliche Konzentration durch Inhalation für 50 % der Bevölkerung) von mehr als 100 mg/l ergibt, und einen CSEO-Wert (Konzentration ohne beobachteten Effekt) strikt über 1 mg/l auf die Daphnienreproduktion gemäß Protokoll OCDE 211 hat.

3. Verfahren zur Herstellung einer Korrosionsschutzfarbe, **dadurch gekennzeichnet, dass** es die mit dem Entgiftungsverfahren nach einem der Ansprüche 1 bis 2 erhaltene Pigment-Verbindung nutzt.

4. Verfahren zur Herstellung einer Korrosionsschutzfarbe nach Anspruch 3, **dadurch gekennzeichnet, dass** es das Nutzen einer Pigment-Verbindung in Kombination mit einer nicht ökotoxischen Ladung wie zum Beispiel Talk, Baryt, Kaolin, Siliciumoxid, Aluminium-, Calcium-, Magnesium-, Kaliumsilikate oder -carbonate, Eisenoxid, Chromoxid grün, Mica, Ferrit, Carbonat, Titandioxid zur Herstellung einer Farbe beinhaltet.

5. Entgiftungsverfahren, mit dem eine Pigment-Verbindung ohne akute und chronische Wasserökotoxizität erhalten werden kann, nach einem der Ansprüche 1 bis 2, **dadurch gekennzeichnet, dass** es das Mischen von Pulver auf physikalischem oder chemischem Weg des Typs sequentielle Präzipitation, sequentielle Kristallisation, Copräzipitation, Cokristallisation, Zerkleinern, Kneten, Dispergieren, Extrudieren, Verschlämmen, Granulieren umfasst.

6. Verfahren zum Gewinnen eines Überzugs, umfassend ein Polymer des Typs Epoxid, Alkyd, Acryl, Vinyl, Polyurethan, Polyester, Aminoplast, Polyolefin, Phenol, Butyral, Butadien, PVDF, Gummi, künstliches oder natürliches Öl, **dadurch gekennzeichnet, dass** es die mit dem Entgiftungsverfahren nach einem der Ansprüche 1 bis 2 erhaltene Pigment-Verbindung benutzt.

7. Verwenden eines Korrosionsschutzüberzugs, erhalten mit dem Verfahren nach Anspruch 6, für die Behandlung eines metallischen Teils oder Objekts wie ein(e) Kraftfahrzeug, Schiff, Luftfahrzeug, Brücke, Baumaschine, Eisenbahn, landwirtschaftliches Gebäude, Industriegebäude, Bandbeschichtung, elektronische Hardware, Computer und Elektrikgeräte, Gas- und Ölanlage.

8. Verfahren zum Erhalten eines Plastikmaterials, **dadurch gekennzeichnet, dass** es die mit dem Entgiftungsverfahren nach einem der Ansprüche 1 bis 2 erhaltene Pigment-Verbindung nutzt.

9. Verfahren zum Erhalten eines Mastiks, **dadurch gekennzeichnet, dass** es die mit dem Entgiftungsverfahren nach einem der Ansprüche 1 bis 2 erhaltene Pigment-Verbindung nutzt.

10. Verfahren zum Erhalten eines Klebstoffs, **dadurch gekennzeichnet, dass** es die mit dem Entgiftungsverfahren nach einem der Ansprüche 1 bis 2 erhaltene Pigment-Verbindung nutzt.

11. Verfahren zum Erhalten einer Druckfarbe, **dadurch gekennzeichnet, dass** es die mit dem Entgiftungsverfahren nach einem der Ansprüche 1 bis 2 erhaltene Pigment-Verbindung nutzt.

12. Verfahren zum Erhalten eines natürlichen oder künstlichen Gummimaterials, **dadurch gekennzeichnet, dass** es die mit dem Entgiftungsverfahren nach einem der Ansprüche 1 bis 2 erhaltene Pigment-Verbindung nutzt.

13. Verfahren zum Erhalten eines festen oder flüssigen Schmiermittels, **dadurch gekennzeichnet, dass** es die mit dem Entgiftungsverfahren nach einem der Ansprüche 1 bis 2 erhaltene Pigment-Verbindung nutzt.

14. Verfahren zum Erhalten eines Düngemittels, **dadurch gekennzeichnet, dass** es die mit dem Entgiftungsverfahren nach einem der Ansprüche 1 bis 2 erhaltene Pigment-Verbindung nutzt.

15. Verfahren zum Erhalten einer Anti-UV-Verbindung für Plastikmaterialien, **dadurch gekennzeichnet, dass** es die mit dem Entgiftungsverfahren nach einem der Ansprüche 1 bis 2 erhaltene Pigment-Verbindung nutzt.

16. Verfahren zum Erhalten einer Anti-UV-Verbindung für Kosmetika, **dadurch gekennzeichnet, dass** es die mit dem Entgiftungsverfahren nach einem der Ansprüche 1 bis 2 erhaltene Pigment-Verbindung nutzt.

## Claims

1. A detoxification method for obtaining a pigment compound free from acute and chronic aquatic ecotoxicity comprising at least one zinc-based component with good anticorrosive properties but high toxicity of zinc phosphate Zn₃(PO₄)₂,0 to 4H₂O and/or zinc oxide, **characterized in that** it comprises mixing zinc phosphate Zn₃(PO₄)₂,0 to 4H₂O with magnesium phosphate MgHPO₄,3H₂O or mixing zinc phosphate Zn₃(PO₄)₂,0 to 4H₂O and zinc oxide with magnesium phosphate MgHPO₄,3H₂O, the weight ratio between the zinc phosphate and the magnesium phosphate being approximately 90%/10%, or the weight ratio between the zinc phosphate, the magnesium phosphate, and the zinc oxide being approximately 80%/10%/10%.

2. The detoxification method for obtaining a pigment compound free from acute and chronic aquatic ecotoxicity according to Claim 1, **characterized in that** said pigment component free from toxicity has an algae inhibition rate of less than 50% according to OECD protocol 201, a daphnia immobilization rate of less than 50% according to OECD protocol 202, and a fish mortality rate of less than 50% according to OECD protocol 203, which results in LC50s (lethal concentration by ingestion for 50% of the population) and EC50s (lethal concentration by inhalation for 50% of the population) of greater than 100 mg/l, and an NOEC (No Observed Effect Concentration) of strictly greater than 1 mg/l on daphnia reproduction according to OECD protocol 211.

3. A method for producing an anti-corrosion paint, **characterized in that** it uses the pigment compound obtained by means of the detoxification method according to either of Claims 1 to 2.

4. The method for producing an anti-corrosion paint according to Claim 3, **characterized in that** it comprises the use of a pigment compound in combination with a non-ecotoxic filler, such as for example talc, barite, kaolin, silica, aluminum silicates or carbonates, calcium silicates or carbonates, magnesium silicates or carbonates, potassium silicates or carbonates, iron oxide, chromium oxide green, mica, ferrite, carbonate, or titanium dioxide, for producing a paint.

5. The detoxification method for obtaining a pigment compound free from acute and chronic aquatic ecotoxicity according to either of Claims 1 to 2, **characterized in that** it comprises mixing powder via a physical or chemical process of a type such as sequential precipitation, sequential crystallisation, co-precipitation, co-crystallisation, grinding, kneading, dispersion, extrusion, forming a slurry, or granulation.

6. A method for obtaining a coating comprising a polymer of epoxy, alkyd, acrylic, vinyl, polyurethane, polyester, aminoplast, polyolefin, phenolic, butyral, butadiene, PVDF, rubber, or synthetic or natural oil type, **characterized in that** it uses the pigment compound obtained by means of the detoxification method according to either of Claims 1 to 2.

7. The use of an anti-corrosion coating obtained according to the method of Claim 6, for treating a metal part or object such as a motor vehicle, ship, aircraft, bridge, civil engineering vehicle, rail vehicle, agricultural building, industrial building, coil coating, electronic, computer and household appliance material, or gas plant and oil plant.

8. A method for obtaining a plastic material, **characterized in that** it uses the pigment compound obtained by means of the detoxification method according to either of Claims 1 to 2.

9. A method for obtaining a mastic, **characterized in that** it uses the pigment compound obtained by means of the detoxification method according to either of Claims 1 to 2.

10. A method for obtaining an adhesive, **characterized in that** it uses the pigment compound obtained by means of the detoxification method according to either of Claims 1 to 2.

11. A method for obtaining an ink, **characterized in that** it uses the pigment compound obtained by means of the detoxification method according to either of Claims 1 to 2.

12. A method for obtaining a natural or synthetic rubber material, **characterized in that** it uses the pigment compound obtained by means of the detoxification method according to either of Claims 1 to 2.

13. A method for obtaining a solid or liquid lubricant, **characterized in that** it uses the pigment compound obtained by means of the detoxification method according to either of Claims 1 to 2.

14. A method for obtaining a fertilizing substance, **characterized in that** it uses the pigment compound obtained by means of the detoxification method according to either of Claims 1 to 2.

15. A method for obtaining an anti-UV compound for plastic materials, **characterized in that** it uses the pigment compound obtained by means of the detoxification method according to either of Claims 1 to 2.

16. A method for obtaining an anti-UV compound for cosmetics, **characterized in that** it uses the pigment compound obtained by means of the detoxification method according to either of Claims 1 to 2.
